(19) Europäisches Patentamt
European Patent Office
Office européen des brevets

(11) **EP 4 668 161 A1**

(12) **EUROPEAN PATENT APPLICATION**

(43) Date of publication:
24.12.2025 Bulletin 2025/52

(21) Application number: 25182538.6

(22) Date of filing: 13.06.2025

(51) International Patent Classification (IPC):
**G06N 3/0442** *(2023.01)* **G06N 10/20** *(2022.01)*

(52) Cooperative Patent Classification (CPC):
G06N 10/20; G06N 3/04; G06N 3/044;
G06N 3/0442; G06N 3/045; G06N 3/0455;
G06N 3/047; G06N 3/0475; G06N 3/048;
G06N 3/049; G06N 3/08; G06N 3/082; G06N 3/084;
G06N 3/088; G06N 3/09; (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.06.2024 IN 202421046550

(71) Applicant: Tata Consultancy Services Limited
Maharashtra (IN)

(72) Inventors:
• RANA, Rahul
700160 Kolkata (IN)
• KAUSHIK, Sakshi
400096 Mumbai (IN)
• ADAK, Kuntal
700160 Kolkata (IN)
• ROY, Suman Kumar
700160 Kolkata (IN)
• POOJARY, Sudhakara Deva
400096 Mumbai (IN)

(74) Representative: Goddar, Heinz J.
Boehmert & Boehmert
Anwaltspartnerschaft mbB
Pettenkoferstrasse 22
80336 München (DE)

Remarks:
A request for correction has been filed pursuant to Rule 139 EPC. A decision on the request will be taken during the proceedings before the Examining Division (Guidelines for Examination in the EPO, A-V, 3.).

(54) **COUNT PREDICTION USING QUANTUM-ENHANCED-LSTM (QELSTM) WITH FEATURE DIMENSIONALITY REDUCTION VIA LINEAR COMBINATIONS OF CORRELATED FEATURES**

(57) Managing circuit depth with increasing n qubits is a technical problem to be solved. A method and system for an object count prediction by analyzing time series using Quantum Enhanced LSTM with feature dimensionality reduction via linear combinations of correlated features. Optimal CNOT gate design that follows qubit entanglement structure by alternating between odd and even qubit indices, with each qubit connected to two other adjacent or non-adjacent qubits is disclosed, which. creates constant circuit depth that can limit to predefined number of quantum operations independent of number of the set of qubits in the QELSTM model. Further, the linear combination generates a set of transformed features that are mapped to the qubits of the QELSTM via a mapping technique that enables entanglement of the qubits based on correlation of the transformed features and in accordance with the optimal CNOT gate design so as to maintain the constant circuit depth.

FIG. 2B

(Cont. next page)

(52) Cooperative Patent Classification (CPC): (Cont.)
**G06N 5/01; G06N 5/022; G06N 10/00;
G06N 10/40; G06N 10/60; G06N 20/00**

**Description**

CROSS-REFERENCE TO RELATED APPLICATIONS AND PRIORITY

The present application claims priority from Indian patent application no. 202421046550, filed on 17 June 2024.

TECHNICAL FIELD

The embodiments herein generally relate to the field of time series forecasting and, more particularly, to a method and system for object count prediction by analyzing time series using Quantum Enhanced Long short-term memory (QELSTM) with feature dimensionality reduction via linear combinations of correlated features.

BACKGROUND

Time series forecasting is a technique for the prediction of events through a sequence of time. It predicts future events by analyzing historical trends. It is used across many fields of study in various applications including weather forecasting, climate forecasting, economic forecasting, healthcare forecasting engineering forecasting, finance forecasting, retail forecasting, business forecasting, environmental studies forecasting, social studies forecasting, and so on. Time series forecasting involves experimentation and understanding of the underlying patterns in the data crucial for predicting the future values of a variable based on its past observations. There are many approaches to solve time series forecasting problems. Deep Learning (DL) models can address the challenges of time series because of their ability to learn complex patterns and dependencies in data. Long Short-Term Memory (LSTM) is one of the effective DL models to solve time series problem because of its ability to capture long-term dependencies by using memory cells and gating mechanisms to selectively store, update, and retrieve information over extended sequences. Its architecture facilitates the learning of intricate patterns in sequential data. LSTM can adapt non-stationary data by capturing temporal dependencies and trends. LSTMs have memory cells that allow them to maintain a memory state that can persist over many time steps, enabling them to store information over long periods. While LSTM networks are powerful tools for time series forecasting, there are certain challenges and considerations associated with their use such as data quality and quantity issues, selecting appropriate hyperparameters requires careful tuning, and they may take longer to converge, and achieving convergence can be challenging in some cases.

Quantum machine learning is emerging as a pivotal field, leveraging quantum computers' computational power. Quantum computers can process and spot patterns in data faster than classical machines, making quantum AI/ML tools more accurate and scalable. A quantum algorithm is realized via a quantum circuit using software tools. The quantum circuit represents the logical flow of operations specifying which gates act on which qubits and in what order. A compilation process translates the abstract circuit into a specific set of gate operations on the physical qubits. The compiled quantum circuit is then loaded onto the Quantum Processing Units (QPUs) that performs the specified gate operations on its physical qubits, wherein the QPU has a specific arrangement of qubits, such as a lattice structure.

The quantum circuit such as a variational quantum circuit (VQC) is a hybrid quantum-classical approach which leverages the strengths of quantum and classical computation. It is a type of quantum circuit with tunable parameters which are optimized in an iterative manner by a classical computer. These parameters can be seen as the weights in artificial neural networks. Quantum LSTM (QLSTM) learns faster and predicts more accurately than the classical LSTM with a fixed number of epochs. Quantum based LSTM have been explored, where VQCs are used to replace the learnable parameters of a LSTM cell, such as the four gates, namely, the cell state, the forget gate, the input gate, and the output gate. The VQC is composed of three major parts: data encoding layer, variational layer, and quantum measurements. The data encoding circuit is used to transform the classical vector (input) into a quantum state (qubits). The variational layer is the actual the learnable components, with circuit parameters updated via gradient descent algorithms or the like. Finally, the quantum measurements are used to retrieve the values for further processing. The encoded classical data, which is now a quantum state, will then go through a series of unitary operations. These quantum operations consist of several Controlled Quantum Gate (CNOT) gates and single-qubit rotation gates. The VQC architecture varies based on the proposed design of the CNOT gates, which are responsible for generating multi-qubit entanglement to process the input qubits. The design of the CNOT gates affects the circuit depth of the quantum circuit (herein the VQC).

However, all existing VQC architectures with varied CNOT gate designs have a technical challenge that the circuit depth increases with increase in qubits. It can also be noted that number of qubits increase with number of inputs such as features to be processed by LSTM models. In quantum computing, circuit depth is the count of time steps from the initialization of the qubits to the final measurement taken. Selecting appropriate depth is important. Balancing circuit depth and connectivity can impact the model's ability to represent quantum states while maintaining computational manageability. The growing circuit depth causes two main issues. One, the accumulation of hardware noise, which impacts the accuracy of the results. The other issue is the trainability of the ansatz parameters, i.e., whether the parameters have large enough gradients to allow for progress in the optimization. Ansatz is the variational layer of the VQC, which consist of set of parametrized gates.

Thus, dependency of circuit depth on qubits is a technical limitation in the state of art approaches and needs to be addressed.

Further, to reduce the number of qubits processed by the VQC, feature dimension reduction approaches are explored. Some common methods for feature selection/extraction are Principal Component Analysis (PCA) and correlation-based feature selection. PCA transforms the higher dimensional data to lower dimensional while retaining the original variance, as much as possible. In PCA, eigenvalues are computed and using elbow rule features above a threshold are selected and others are discarded. In correlation-based feature selection, subset of the most informative features is selected. Both these and other commonly used methods for dimensionality reduction suffer from information loss because some features are discarded, thus affecting the output accuracy of any model.

SUMMARY

Embodiments of the present disclosure present technological improvements as solutions to one or more of the above-mentioned technical problems recognized by the inventors in conventional systems.

For example, in one embodiment, a method for object count prediction is provided. The method includes acquiring historical time series data associated with presence of a plurality of objects at each of a plurality of nodes per predefined time window. Further the method includes deriving a plurality of features by processing the historical time series data to obtain patterns, seasonality, and trends in context of a set of predefined time periods and a plurality of calendar events. Further, the method includes generating a feature correlation matrix defining pairwise correlation between plurality of features in terms of correlation score to linearly combine correlated features and obtain a set of transformed features with dimensionality reduction.

Furthermore, the method includes mapping the set of transformed features to corresponding set of qubits of Variational Quantum Circuit (VQCs) of a Quantum Enhanced Long short-term memory (QELSTM) model based on correlation between each of the transformed features with highest correlated qubits are placed adjacent to each other. An optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC.

Further, the method includes training the QELSTM model with the set of transformed features for object count prediction of at a node using a gradient-based optimization technique, wherein the VQCs that replace learnable parameters of a classical LSTM are executed by Quantum Processing Units (QPUs) by Quantum Processing Units (QPUs) of the quantum computing system.

In another aspect, a system for count prediction is provided. The system comprises a classical computing system and a quantum computing system. The classical computing system comprising a memory storing instructions; one or more Input/Output (I/O) interfaces; and one or more classical hardware processors coupled to the memory via the one or more I/O interfaces, wherein the one or more hardware processors are configured by the instructions to acquire historical time series data associated with presence of a plurality of objects at each of a plurality of nodes per predefined time window. Further, the one or more classical hardware processors are configured to derive a plurality of features by processing the historical time series data to obtain patterns, seasonality, and trends in context of a set of predefined time periods and a plurality of calendar events. Further, the method includes generating a feature correlation matrix defining pairwise correlation between plurality of features in terms of correlation score to linearly combine correlated features and obtain a set of transformed features with dimensionality reduction.

Furthermore, one or more classical hardware processors are configured to map the set of transformed features to corresponding set of qubits of Variational Quantum Circuit (VQCs) of a Quantum Enhanced Long short-term memory

(QELSTM) model based on correlation between each of the transformed features with highest correlated qubits are placed adjacent to each other. An optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC.

Further, one or more classical hardware processors are configured to training the QELSTM model with the set of transformed features for object count prediction of at a node using a gradient-based optimization technique, wherein the VQCs that replace learnable parameters of a classical LSTM are executed by Quantum Processing Units (QPUs) of the quantum computing system.

In yet another aspect, there are provided one or more non-transitory machine-readable information storage mediums comprising one or more instructions, which when executed by one or more hardware processors causes a method for object count prediction is provided. The method includes acquiring historical time series data associated with presence of a plurality of objects at each of a plurality of nodes per predefined time window. Further the method includes deriving a plurality of features by processing the historical time series data to obtain patterns, seasonality, and trends in context of a set of predefined time periods and a plurality of calendar events. Further, the method includes generating a feature correlation matrix defining pairwise correlation between plurality of features in terms of correlation score to linearly combine correlated features and obtain a set of transformed features with dimensionality reduction.

Furthermore, the method includes mapping the set of transformed features to corresponding set of qubits of Variational Quantum Circuit (VQCs) of a Quantum Enhanced Long short-term memory (QELSTM) model based on correlation between each of the transformed features with highest correlated qubits are placed adjacent to each other. An optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC.

Further, the method includes training the QELSTM model with the set of transformed features for object count prediction of at a node using a gradient-based optimization technique, wherein the VQCs that replace learnable parameters of a classical LSTM are executed by Quantum Processing Units (QPUs) by Quantum Processing Units (QPUs) of the quantum computing system.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an architectural overview of the system for an object count prediction by analyzing time series using Quantum Enhanced Long short-term memory (QELSTM) with feature dimensionality reduction via linear combinations of correlated features, in accordance with some embodiments of the present disclosure.

FIG. 2A is a functional block diagram of the system depicted in FIG. 1A depicting a combination of classical computing system and a quantum computing system for the object count prediction by analyzing time series using the QELSTM with feature dimensionality reduction via linear combinations of correlated features, in accordance with some embodiments of the present disclosure.

FIG. 2B is a sequence diagram depicting QELSTM training process distributed between the classical computing system and the quantum computing system, in accordance with some embodiments of the present disclosure.

FIG. 3 is a flow diagram illustrating a method for the object count prediction by analyzing time series using the QELSTM with feature dimensionality reduction via linear combinations of correlated features, using the system depicted in FIGS. 1A, 1B, and FIGS. 2A and 2B, in accordance with some embodiments of the present disclosure.

FIG. 4 depicts generation of a set transformed features by combining correlated features extracted from time series data, in accordance with some embodiments of the present disclosure.

FIG. 5A and 5B is the QELSTM model of the quantum computing system depicting an optimal Controlled Quantum (CNOT) gate structure that enables maintaining constant circuit depth, independent of the physical qubits at the input of the quantum computing system, in accordance with some embodiments of the present disclosure.

FIGS. 6A and 6B depict examples for transformed features to qubit indices mapping, in accordance with some embodiments of the present disclosure.

FIGS. 7A and 7E represent multiple CNOT gate designs depicting how the optimal CNOT gate design enables the circuit depth independent of number of qubits, in accordance with some embodiments of the present disclosure.

FIGS. 8A and 8B all qubit hardware connectivity and limited qubit connectivity of quantum circuits, in accordance with some embodiments of the present disclosure.

FIG. 9 is a graph comparing circuit depth offered by QELSTM versus general state of the art QLSTM as number of input qubits increase, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The technical limitation of existing quantum computing based Long short-term memory (LSTM) is the circuit depth that increases as number of qubits increase. Increase in circuit depth directly corresponds to the number of quantum operations. The number of qubits required are proportional to the number of features extracted from the input data. One of the major quantum circuit design factor contributing to circuit dept is the Controlled Quantum (CNOT) gates design that is based on entanglement between qubits as a result of correlation between features to be processed. Existing CNOT gate designs implementing the qubit entanglement tend to increase circuit depth as number of qubits increase or the specific requirement of entanglement between the qubits.

Embodiments of the present disclosure provide a method and system for an object count prediction by analyzing time series using Quantum Enhanced Long short-term memory (QELSTM) with feature dimensionality reduction via linear combinations of correlated features. A Variational Quantum Circuit (VQC) of the QELSTM has an optimal CNOT gate design for qubit entanglement by alternating between odd and even qubit indices. The optimal design disclosed is a limited CNOT gate circuit such that it maintains a constant circuit depth irrespective of whether connectivity is between adjacent or non-adjacent qubits. The constant circuit depth refers to limiting the count of time steps needed to execute all the gates in a quantum circuit to a predefined or constant number independent of number of the set of qubits in the QELSTM model. The QELSTM is configured to process features extracted from input time series data, wherein the feature dimension is reduced by applying linear combination of correlated features to generate a set of transformed features, without discarding any of the initial extracted features. The transformed features are then mapped to the qubits of the QELSTM via the mapping technique, which enables entanglement of the qubits based on correlation between the transformed features. Thus, the mapping technique ensure that the most correlated qubits (features) are placed adjacent to each other in accordance with the optimal CNOT gate design, thus reducing instances of connecting non-adjacent qubits. As understood, connectivity between non-adjacent qubits adds complexity in achieving the connectivity, thus by reducing such instances using mapping technique and the optimal CNOT gate design the system maintains a constant circuit depth independent of the number of qubits.

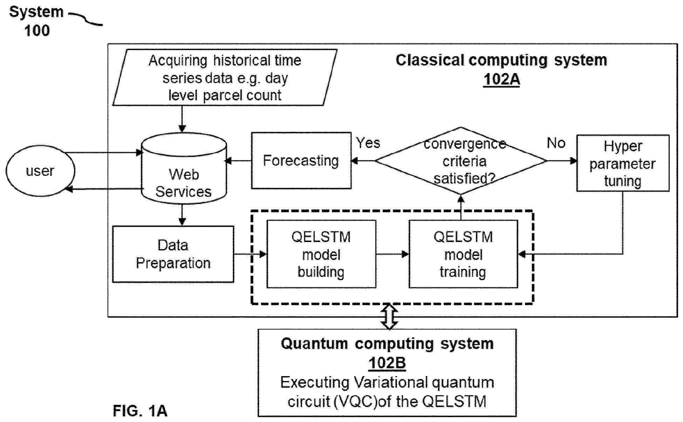

Referring now to the drawings, and more particularly to FIGS. 1A through 9, where similar reference characters denote corresponding features consistently throughout the figures, there are shown preferred embodiments, and these embodiments are described in the context of the following exemplary system and/or method.

FIG. 1A illustrates an architectural overview of the system 100 for an object count prediction by analyzing time series using Quantum Enhanced Long short-term memory (QELSTM) with feature dimensionality reduction via linear combinations of correlated features, in accordance with some embodiments of the present disclosure.

As depicted in FIG. 1A, historical data for a predefined time period is acquired by the system 100 via a web platform interface and processed to extract features of the time series data, post data preprocessing. The extracted features are combined using correlation based linear combination without discarding any features to generate a set of transformed features providing dimensionality reduction. The set of transformed features are then used to train the QELSTM. The transformed set of features are mapped to qubits of the Variational Quantum Circuits (VQCs) of the QELSTM. The VQCs are ported to the quantum computing system 102B and are processed by the quantum computing system 102B, while the trainable parameters are optimized in classical computer system 102A. The VQC design has an optimal CNOT gate design, which provides constant circuit depth for quantum circuit operations, making the circuit depth independent of the number of input qubits being used by the VQC.

Once trained, the QELSTM, during inferencing stage, can be used for prediction or forecasting of object count at a node. The object count prediction examples can include per day parcel count, stock price forecasting/prediction, weather forecasting, or any time series based forecasting related use cases. In QELSTM model, disclosed comprises parameterized quantum circuits or VQCs in each gate of each LSTM cell, which leads to a reduction in the number of trainable parameters during training and computation steps, faster convergence, and better accuracy. The QELSTM model can easily execute on current available quantum hardware, suitable for both strongly qubit connected and limited qubit connected hardware.

No feature is discarded during feature dimension reduction, wherein such a transformation can help enhance the predicting power of the features and multicollinearity (two or more independent variables are highly correlated with each other).

By focusing on relevant feature interaction, the QELSTM model (algorithm) can avoid unnecessary computations and optimize resource utilization. The number of trainable parameters of the QELSTM is 23 times less than the number of trainable parameters of classical LSTM. The number of computations of the QELSTM is 11 times less than the number of computations of classical LSTM and the accuracy is also improved compared to classical LSTM.

The customized quantum circuits (comprising the optimal CNOT design) in the QELSTM model is designed to reflect the feature correlations that specifically target the interactions and dependencies between the correlated features. Feature representation is enhanced by connecting the CNOT gates according to the correlation between features, the quantum circuit can effectively capture the information contained in these features and express the interaction between features. CNOT gates create entangled states encoding the combined information of correlated features. The circuit depth has been reduced to constant i.e., even if the number of qubits goes higher, the depth will remain the same for the proposed circuit.

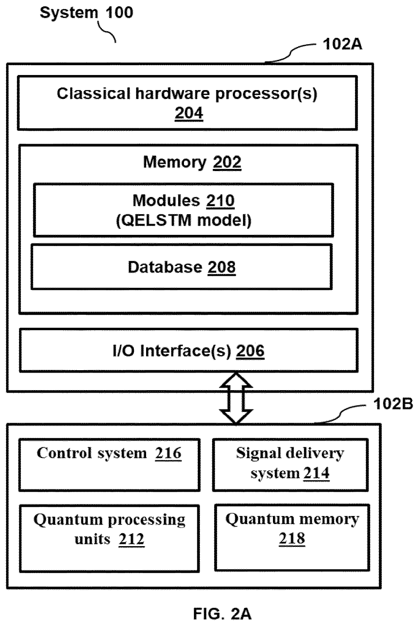

FIG. 2A is a functional block diagram of the system of FIG. 1A depicting a combination of classical computing system 102A and a quantum computing system 102B for the object count prediction by analyzing time series using the QELSTM with feature dimensionality reduction via linear combinations of correlated features, in accordance with some embodiments of the present disclosure.

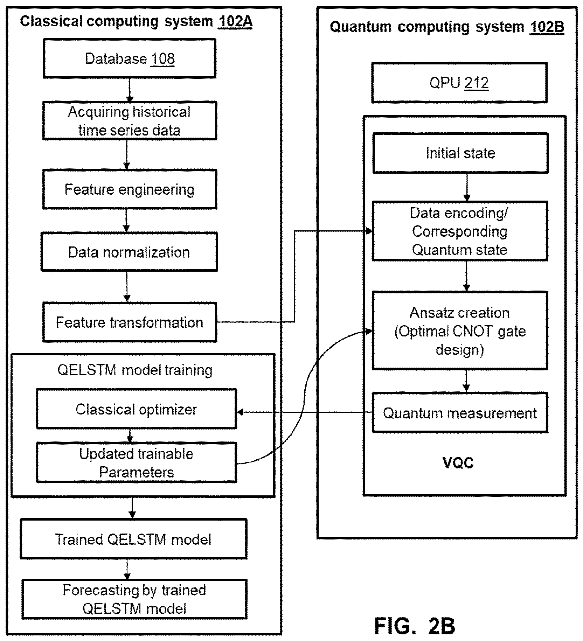

FIG. 2B is a sequence of steps depicting QELSTM training process distributed between the classical computing system 102A and the quantum computing system 102B, in accordance with some embodiments of the present disclosure.

In an embodiment, the classical computing system 102A includes a hardware processor(s) 204, also referred to as classical hardware processors, Input/Output interface 206, and one or more data storage devices or a memory 202 operatively coupled to the processor(s) 204. The classical computing system 102A with one or more hardware processors is configured to execute functions of one or more functional blocks of the classical computing system 102A.

Referring to the components of classical computing system 102A, in an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the classical computing system 102A can be implemented in a variety of computing systems including laptop computers, notebooks, hand-held devices such as mobile phones, workstations, mainframe computers, servers, and the like.

The I/O interface(s) 206 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices to acquire the historical time series data or enable an end user to communicate with the system 100.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such data preparation module (not shown), the QELSTM model, a transformed feature generation module ( not shown) for feature reduction using linear combination, and the like. The QELSTM model is executed by the one or more hardware processors of 204 of the classical computing system 102A, wherein the quantum computing system 102B comprises VQCs component of the QELSTM having the optimal CNOT gate design as explained later in description of 102B.

The plurality of modules 210 include programs or coded instructions that supplement applications or functions performed by the system 100 for the object count prediction by analyzing time series using the QELSTM with feature dimensionality reduction via linear combinations of correlated features, being performed by the system 100. The plurality of modules 210, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 210 can be used by hardware, by computer-readable instructions executed by the one or more hardware processors 204, or by a combination thereof. The plurality of modules 210 can include various sub-modules (not shown).

Further, the memory 202 may comprise information pertaining to input(s)/output(s) of each step performed by the processor(s) 204 of the system 100 and methods of the present disclosure. Further, the memory 102 includes a database 108. The database (or repository) 208 may include a plurality of abstracted pieces of code for refinement and data that is processed, received, or generated as a result of the execution of the plurality of modules in the module(s) 210. The database can also store quarried historical time series data, the predicted object count for further processing and so on.

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 2A) and/or existing data may be modified and/or non-useful data may be deleted from the database. **In** one example, the data may be stored in an external system, such as a Lightweight Directory Access Protocol (LDAP) directory and a Relational Database Management System (RDBMS).

In an embodiment, the I/O interface 206 comprises a high speed digital interface, which connects the classical computing system 102A and the quantum computing system 102B.

Referring to the components of quantum computing system 102B example quantum computing system 102B shown in FIG. 2A and 2B includes a plurality of Quantum Processing Units (QPUs) 212, a signal delivery system 214, a control system 216, and a quantum memory 218. In an embodiment, the plurality of QPUs is unentangled and hence alternatively called the plurality of unentangled QPUs.

. In an embodiment, the quantum computing system 102B can operate using gate-based models for quantum computing. For example, as also can be seen in FIG. 2B, the Qubits can be initialized in an initial state, and a quantum logic circuit, such as the VQC, comprised of a series of quantum logic gates can be applied to transform the qubits and extract measurements representing the output of the quantum computation. For example, the quantum circuit (QC) that is component of the QELSTM of the system 100 herein is a parameterized QC or VQC. A quantum algorithm can be realized via the quantum circuit using software tools. The quantum circuit, such as the VQC used herein represents the logical flow of operations specifying which gates act on which qubits and in what order. A compilation process translates the abstract circuit into a specific set of gate operations on the physical qubits. The compiled quantum circuit is then loaded onto the Quantum Processing Units (QPUs) 212 of the quantum computing system 102B, which performs the specified gate operations on its physical qubits.

The example QPUs 212 shown in FIG.1A

may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the QPUs 212.

Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The QPUs 212 may be implemented using another type of physical system such as photonic, neural atoms, trapped ions, quantum dots, etc.

The QPUs 212 perform the specified gate operations on its physical qubits in accordance with the quantum circuit design. The operations include rotations, flips, and entanglement. During execution, the qubits evolve according to the quantum gates, entanglements, and measurements. As depicted in FIG. 2B, after the quantum operations, the qubits are measured. Each measurement collapses the qubit's superposition state to either 0 or 1. Repeated measurements enable to estimate probabilities and compute the final result quantum computation, that is communicated to the classical computing system 102A over the high speed digital interface.

For example, a quantum memory 218 can receive control signals from the control system 216 and deliver the control signals to the QPUs 212. In some instances, the quantum memory 218 performs preprocessing, signal conditioning, or other operations to the control signals before delivering them to the QPUs 212. In an embodiment, the quantum memory 218 includes connectors or other hardware elements that transfer signals between the QPUs 212 and the control system 216. In an embodiment, the quantum memory 218 is a quantum-mechanical version of classical computer memory. The classical computer memory stores information such as binary states and the quantum memory 218 stores a quantum state for later retrieval. These states hold useful computational information known as Qubits.

In the example quantum computer system 102B shown in FIG. 2A, the control system 216 controls operation of the QPUs 212. The example control system 212 may include data processors, signal generators, interface components and other types of systems or subsystems In some embodiments, the control system 216 includes a classical computing system that executes software to compile instructions for the QPUs 212. For example, the control system 216 may decompose a quantum logic circuit or quantum computing program into discrete control operations or sets of control operations that can be executed by the hardware in the QPUs 212.In some embodiments, the quantum computer system 104 includes multiple quantum information processors that operate as respective quantum processor units (QPUs) 212.

In an embodiment, quantum simulators such as StateVector simulator, QASM simulator, Matrix product state simulator and Penny lane default qubit simulator etc. can be used during development before the final quantum algorithms can be finalized and executed on physical hardware with the QPUs 212.

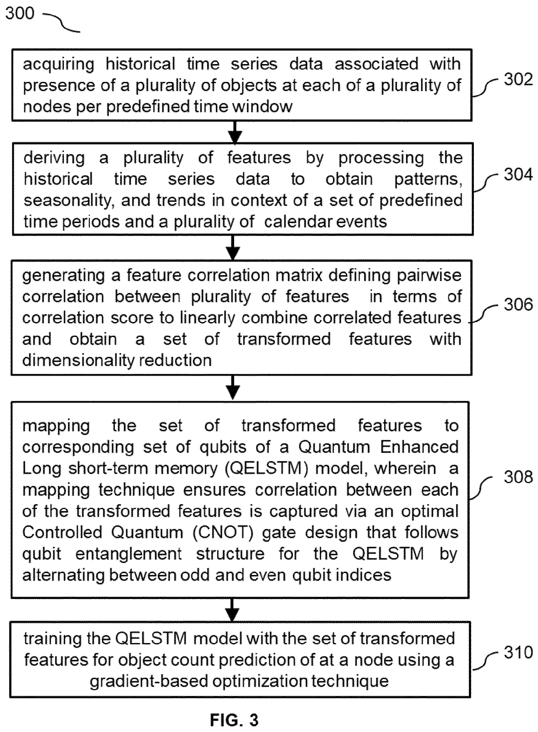

Functions of the components of the system 100 are now explained with reference to steps of flow diagrams in FIG. 3 through FIG. 9.

FIG. 3 is a flow diagram illustrating a method 300 for the object count prediction by analyzing time series using the QELSTM with feature dimensionality reduction via linear combinations of correlated features, using the system 100 depicted in FIG. 1A, and FIGS. 2A and 2B, in accordance with some embodiments of the present disclosure.

In an embodiment, the system 100 comprises the classical computing system 102A with one or more data storage devices or the memory 202 operatively coupled to the processor(s) 204, and the quantum computing system 102B for executing the quantum operations and is configured to store instructions for execution of steps of the method 300 by the processor(s) or one or more hardware processors 204 (classical hardware processors) and the QPUs 212. The steps of the method 300 of the present disclosure will now be explained with reference to the components or blocks of the system 100 as depicted in FIG. 1A, FIGS. 2A and 2B, and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

The objective is to train a QELSTM model for object count prediction, and then use the trained QELSTM model during inferencing stage for real time prediction of objects at a given node.

Referring to the steps of the method 300, at step 302 of the method 300, the one or more classical hardware processors 204 are configured by the instructions to acquire historical time series data associated with presence of a plurality of objects at each of a plurality of nodes per predefined time window. For example, for building and training the QELSTM for day level parcel count data, historical time series data of parcel arrival for different terminals or distributions nodes is collected. Thus, the [predefined window can be per day, per hour, per week as is the need of application/use case under consideration.

At step 304 of the method 300, the one or more classical hardware processors 204 are configured by the instructions to derive a plurality of features by processing the historical time series data to obtain patterns, seasonality, and trends in context of a set of predefined time periods and a plurality of calendar events. The acquired historical time series data is raw data that needs to be processed so that it is in a state for enabling accurate information extraction. The processing of the acquired historical time series by the data preparation module is explained below.

Data Analysis: Data analysis plays an important role in capturing historical patterns, identifying seasonality and trend to make accurate predictions. Performed exploratory data analysis to gain insights into behavior and characteristics of the data.

Feature Engineering: Feature Engineering involves adding new features or transforming existing ones to improve the model's ability to capture seasonality, trends and other cyclic patterns that might influence the target variable. The features defined herein for any time series data are based on date-time information such as day of the month, week of the month, week of the year that helps to capture seasonality and calendar related patterns in the time series being processed. Further, for example of logistic application with objective of parcel count prediction, features include holidays and special events that might impact the time series data. For example, the number of parcels experience spike during December festival season so it is vital to add features like Advent Sunday and Advent Monday etc.

Data Normalization: Normalizing the input features ensures that the attribute values are on a similar scale. It is essential for datasets with different magnitudes across different features and involves reshaping the columns to fit to a standard scale. Main aim of normalization is to find a common scale for the data while maintaining the underlying variation in the range of values. This transformation helps in faster convergence, improved model performance. For example, a Z-score normalization can be used, prior to QELSTM model training. Values are normalized using the mean and standard deviation of the data. This type of normalization is useful when there exist a few outliers but not so extreme that they are needed to be removed.

Once the features are extracted, at step 306 of the method 300, the one or more classical hardware processors 204 are configured by the instructions to generate a feature correlation matrix defining pairwise correlation between plurality of features in terms of correlation score to linearly combine correlated features. The transformed feature generation module is configured to apply the linear combination and obtain a set of transformed features with dimensionality reduction.

The steps to apply linear combination on one or more features among the plurality of features into transform into a transformed feature include:

1. Generating a correlated graph of the plurality of features.
2. Combining a subset set of features in a sub-graph into the transformed feature if the sub-graph is fully connected.
3. Retaining the non-fully connected features as individual features.

Instead of discarding any feature, the method 300 discloses a step of converting the most correlated features into a single feature by taking customized linear combinations of them where coefficient values are not assumed or taken randomly but are calculated as correlation between the feature and the target variable.

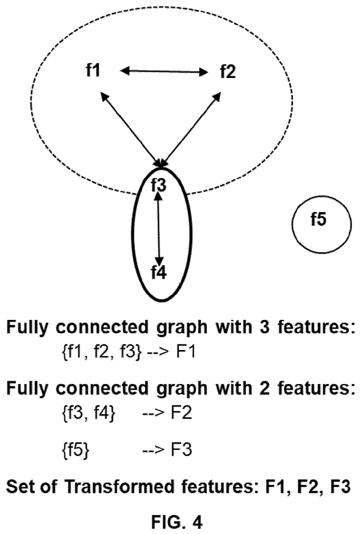

Referring to FIG. 4, let initial N features be f1, f2, f3, ..., fN. After deriving the pairwise feature correlation matrix, an average of all correlated values is taken to obtain a threshold value. Next, as depicted in FIG. 4, a correlation graph is obtained in which nodes represent the features and edges represent the correlation score between them. From this graph the fully connected sub-graphs are identified. For each fully connected subgraph, one single transformed feature is created using linear combinations of the features that belong to each subgraph.

Let us assume five features, f1, f2, f3, f4, f5, and the feature correlation matrix of these features is as in Table 1.

Table 1

| features | f1 | f2 | f3 | f4 | f5 |
|---|---|---|---|---|---|
| f1 | 1 | 0.3 | 0.5 | 0.1 | 0.03 |
| f2 | 0.3 | 1 | 0.6 | 0.05 | 0.02 |
| f3 | 0.5 | 0.6 | 1 | 0.8 | 0.1 |
| f4 | 0.1 | 0.05 | 0.8 | 1 | 0.07 |
| f5 | 0.03 | 0.02 | 0.1 | 0.07 | 1 |

Now, the threshold value = average (distinct correlation values) = average (1, 0.3, 0.5, 0.1, 0.03, 0.6, 0.8, 0.02, 0.05, 0.07) = 0.347 ~ 0.3 (Approximated to the nearest available value in the feature correlation matrix which is less than or equal to the determined average value)

In the above diagram, {f1, f2, f3} form a fully connected subgraph, therefore they can be combined into 1 single feature. Similarly,

{f1, f2, f3} --> **F1**

{f3, f4} --> F2

{f5} --> F3

Linear combination of combined features,

$$F1 = c1f1 + c2f2 + c3f3$$

$$F2 = c3f3 + c4f4$$

Where, c1 = correlation between f1 and t (where t: target feature)

c2 = correlation between f2 and t

c3 = correlation between f3 and t

c4 = correlation between f4 and t

Note: A fully connected graph means a complete graph in which every pair of distinct vertices is connected by a unique edge. If a sub-graph is fully connected, only then the set of features in the sub-graph are combined into one feature.

At step 308 of the method 300, the one or more classical hardware processors 204 are configured by the instructions to map the set of transformed features to corresponding set of qubits of the VQC. A mapping technique ensures correlation between each of the transformed features is captured via an optimal Controlled Quantum (CNOT) gate design that follows qubit entanglement structure for the QELSTM by alternating between odd and even qubit indices, with each qubit connected to two other adjacent or non-adjacent qubits. This maintains the constant circuit depth, wherein the constant circuit depth limits to a predefined number of quantum operations independent of number of the set of qubits in the VQC.

The mapping technique that enables entanglement of the qubits in accordance with the optimal CNOT gate design maintaining the constant circuit depth comprises:

1. Generating a transformed feature correlation matrix of the set of transformed features comprising a correlation score between each of the set of transformed features.
2. Determining the highest correlation score and associated two transformed features from among the set of transformed features.
3. Selecting number of a set of qubits for the VQC of the QELSTM model equal to number of set of transformed features and assigning first transformed feature among the two transformed features to a first qubit.
4. Determining the next two transformed features from the remaining set of transformed that have highest correlation score with the first transformed feature.

5. Assigning the next two transformed features to a second cubit and the last qubit from among the set of qubits.

6. Determining the highest correlation score from among the unassigned transformed features.

7. Repeating the assigning of the unassigned transformed features to unassigned qubits from the set of qubits until all among the set of transformed features are assigned.

Ansatz is the variational layer of the VQC, which consist of set of parametrized gates. These parameters are the trainable parameters. The method herein discloses a new ansatz providing an optimal CNOT gate design, which involves arranging the CNOT gates in such a way that they interact with the qubits in a systematic manner, alternating between odd and even indices. This pattern creates a specific entanglement structure in the quantum circuit. This structure of CNOT gates keeps the circuit depth constant with respect to number of qubits in the circuit. Basically, circuit depth is not dependent on the number of qubits. Circuit depth is = 8 if number of qubits is an even number, else 9 Once the ansatz is defined (the optimal CNOT gate design), as explained above, the mapping technique based on the correlation among the set of transformed features they are assigned or mapped to the qubits of the VQC.

Example: Let the set of transformed features to be processed be 7, namely F1, F2, F3, ..., F7 with the corresponding transformed feature correlation matrix as given is Table 2 below:

Table 2

| Transformed features | F1 | F2 | F3 | F4 | F5 | F6 | F7 |
|---|---|---|---|---|---|---|---|
| **F1** | 1 | 0.8 | 0.4 | 0.7 | 0.6 | 0.8 | 0.1 |
| F2 | 0.8 | 1 | 0.5 | 0.6 | 0.2 | 0.7 | 0.05 |
| F3 | 0.4 | 0.5 | 1 | 0.2 | 0.8 | 0.1 | 0.1 |
| F4 | 0.7 | 0.6 | 0.2 | 1 | 0.1 | 0.05 | 0.3 |
| **F5** | 0.6 | 0.2 | 0.8 | 0.1 | 1 | 0.9 | 0.1 |
| F6 | 0.8 | 0.7 | 0.1 | 0.05 | 0.9 | 1 | 0.2 |
| F7 | 0.1 | 0.05 | 0.1 | 0.3 | 0.1 | 0.2 | 1 |

The number of qubits in the circuit is equal to the number of features. In the VQC each qubit is connected with 2 other qubits, so needed are the two most correlated features for each feature based on the correlation score.

1. First, the highest correlation score has been found, and related two features has been selected, and any one of them has been assigned as 1st qubit.

2. Based on the 1st assigned qubit, the two highest correlation score are found and corresponding features and are assigned to 2nd and last qubit based on the scores.

3. Collect the correlation score list of the feature, which has been assigned to 2nd qubit. Discard those features which already has been assigned to the qubits (including last qubit) from the correlation score list and select the maximum scored feature from the rest of the list. Assign the selected feature as the next immediate qubit.

Repeat the 3rd process for assigning rest of the features to the consecutive qubits (excluding last as it has been assigned previously).

Example:

1. Referring to Table 2, correlation score between F5 and F6 is highest and F6 is assigned to 1st qubit.

2. The next highest correlated feature of F6 id found i.e. F5, F1 and assigned F5 and F1 to 2nd and last qubit respectively. [corr. score (F6, F5): 0.9 > corr. score (F6, F1): 0.8]

3. For F5, collect the correlation score list, and discard the assigned features i.e., F6 and F1. Select the highest feature, which is F3, and assign it to the next immediate qubit i.e., 3rd qubit.

4. For F3, select the correlation score list, and discard the assigned features i.e., F5, F6 and F1. Select the highest feature, which is F2, and assign it to the next immediate qubit i.e., 4th qubit.

5. For F2, we collect the correlation score list, and discard the assigned features i.e., F5, F6, F1, and F3. Select the highest feature, which is F4, and assign it to the next immediate qubit i.e., 5th qubit.

6. For F4, we collect the correlation score list, and discard the assigned features i.e., F5, F6, F1, F3 and F2. Select the highest feature, which is F7, and assign it to the next immediate qubit i.e., 6th qubit.
7. So, the feature assigned qubits are F6 -> q1, F5 -> q2, F3->q3, F2->q4, F4->q5, F7->q6, F1->q7.

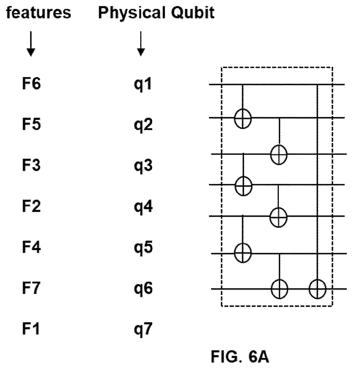

With the above steps executed by the mapping technique, the corresponding VQC design of the QELSTM have the design as depicted in FIG. 6A. In the above part the circuit depth is 3 which is present in the last qubit. so the circuit depth of the entire circuit is (6+3)=9

{F6: [F5, F1],

F5: [F6, F3],

F3: [F5, F2],

F2: [F3, F4],

F4:[F2, F7],

F7:[F4, F1],

F1: [F7, F6]}

Example 2: with 10 features/qubits

Table 3

|  | F1 | F2 | F3 | F4 | F5 | F6 | F7 | **F8** | F9 | F10 |
|---|---|---|---|---|---|---|---|---|---|---|
| F1 | 1 | 0.14 | 0.77 | 0.14 | 0.85 | 0.08 | 0.68 | 0.79 | 0.85 | 0.41 |
| F2 | 0.14 | 1 | 0.18 | 0.15 | 0.55 | 0.39 | 0.48 | 0.28 | 0.84 | 0.54 |
| F3 | 0.77 | 0.18 | 1 | 0.89 | 0.59 | 0.6 | 0.92 | 0.27 | 0.6 | 0.15 |
| F4 | 0.14 | 0.15 | 0.89 | 1 | 0.05 | 0.87 | 0.93 | 0.89 | 0.67 | 0.83 |
| F5 | 0.85 | 0.55 | 0.59 | 0.05 | 1 | 0.79 | 0.85 | **0.97** | 0.53 | 0.05 |
| **F6** | 0.08 | 0.39 | 0.6 | 0.87 | 0.79 | 1 | 0.06 | **0.98** | 0.26 | 0.46 |
| **F7** | 0.68 | 0.48 | 0.92 | 0.93 | 0.85 | 0.06 | 1 | 0.15 | 0.16 | 0.76 |
| F8 | 0.79 | 0.28 | 0.27 | 0.89 | 0.97 | 0.98 | 0.15 | 1 | 0.41 | 0.34 |
| F9 | 0.85 | 0.84 | 0.6 | 0.67 | 0.53 | 0.26 | 0.16 | 0.41 | 1 | 0.68 |
| F10 | 0.41 | 0.54 | 0.15 | 0.83 | 0.05 | 0.46 | 0.76 | 0.34 | 0.68 | 1 |

{F8 : [F6, F5]
F6: [F8, F4 ]
F4: [F6, F7]
F7: [F4, F3]
F3: [F7, F1]
F1: [F3, F9]
F9: [F1, F2]
F2: [F9, F10]
F10: [F2, F5]
F5: [F8, F10]}

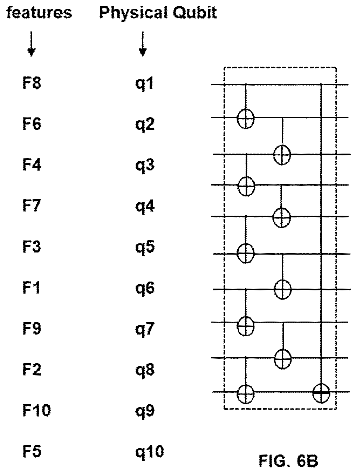

So, the qubit assignment or mapping in accordance with the mapping technique is as follows:
F8 -> q1, F6 -> q2, F4 -> q3, F7 -> q4, F3 -> q5, F1 -> q6, F9 -> q7, F2 -> q8, F10 -> q9, F5 -> q10, as depicted in FIG. 6B.

**Explained now is how the disclosed CNOT gate design or structure is an optimal CNOT gate design for maintaining constant circuit depth, which is independent of the number of qubits:**

The main goal is to create an ansatz where circuit depth is independent of number of qubits that means circuit depth will not increase even if number of qubits increases. This leads to a smaller number of quantum computations and less error prone even for the large number of qubits.

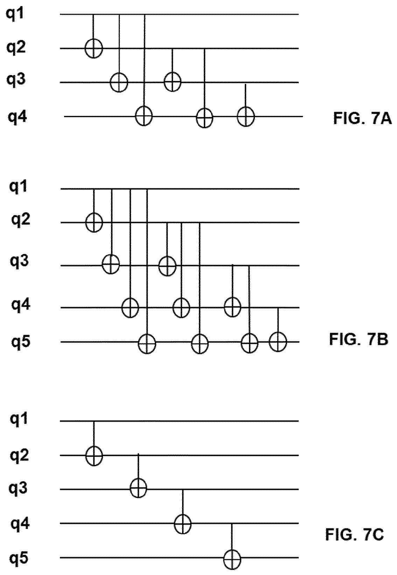

If all possible pair of qubits are chosen and CNOT gates are applied, then the circuit depth is = n-1 (where n is number of qubits), so for large number of features circuit depth linearly increases and leads to a greater number of computations and more error prone. Also, here the total number of quantum gates needed is more. As depicted in FIG. 7A and 7B, the circuit depth is = 3 = (4-1) Here, the circuit depth is = 4 = (5-1)

If all possible adjacent qubits are chosen and CNOT gates are applied as in FIG. 7C then also the circuit depth is = n-1, which is dependent on the number of qubits If a cyclic pattern is chosen with order for CNOT gates then the circuit depth is = n/2 (if n is even) = (n+1)/ 2, if n is odd, which is again dependent of n (number of qubits)

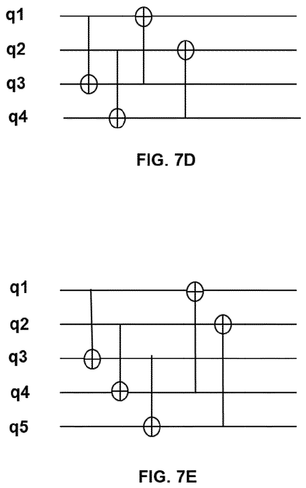

However, in FIG. 7D the circuit depth = 2 = 4/2, and in FIG. 7E the circuit depth = 3 = (5+1)/2

So, as disclosed by the method 300 herein, the CNOT gates are arranged in such a way that they interact with the qubits in a systematic manner, alternating between odd and even indices. In this case the circuit depth is = 2 (if n is even) or 3 (if n is odd), which is independent on the number of qubits. So, this ansatz can handle large number of qubits with a smaller number of computations and with less error prone.

Once the qubits are mapped, at step 310 of the method 300, the one or more classical hardware processors 204 are configured by the instructions to train the QELSTM model with the set of transformed features for object count prediction of at a node using a gradient-based optimization technique, wherein the VQCs of the QELSTM are executed by Quantum Processing Units (QPUs).

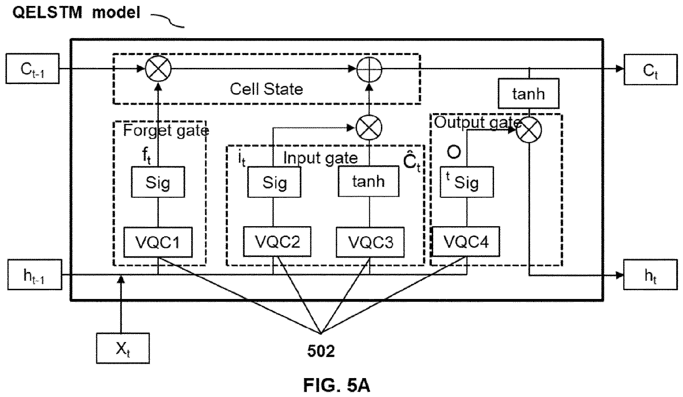

As depicted in FIG. 5A In QELSTM, the learnable parameters W and b in classical LSTM have been replaced by Variational Quantum Circuits for each of the 4 gates (VCQ1, VCQ2, VCQ3 and VCQ4) so that the parameters can learn quickly, and the model can converge in optimal iterations with the power of Quantum computing. The variational layer (CNOT gate) is the actual the learnable components, with circuit parameters updated via gradient descent algorithms or the like. The equations for FIG. 5A are as below:

$$v_t = [\ h_{t-1}\ ,\ x_t\ ];$$

$$f_t = \mathrm{Sig}\ (\ \mathrm{VQC1}(\ v_t\ ))$$

$$i_t = \mathrm{Sig}\ (\ \mathrm{VQC2}(\ v_t\ ))$$

$$\hat{C}_t = \tanh\ (\ \mathrm{VQC3}(\ v_t\ ))$$

$$C_t = f_t * C_{t-1} + i_t * \hat{C}_{t;}\ O_t = \mathrm{Sig}\ (\ \mathrm{VQC4}(\ v_t\ ))$$

$$h_t = O_t * \tanh\ (C_t\ )$$

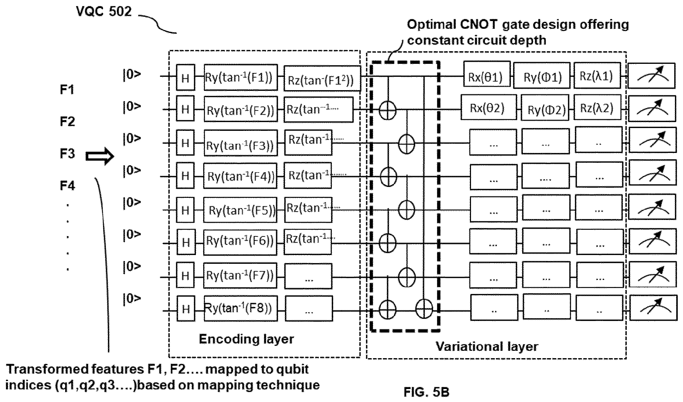

Linear mapping technique has been used to map the required data to the qubits of the VQC due to the limitation of qubits on quantum machines. The VQC is responsible for optimizing the parameters in the QELSTM model to ensure the model performance. As depicted in FIG. 5B, QELSTM utilizes 4 VQCs and every VQC has a similar structure. In VQC there are mainly 3 stages as described below. The qubits of the circuit are initialized as |0) i.e., the state value of the qubits is 0 initially. After this, encoding occurs to convert classical data to quantum data as quantum circuit cannot process classical data. Then variational layer comes to establish the correlation between qubits and provide rotational parameters and lastly, measurements to get the value from the circuit.

Encoding: is a process of mapping classical input data to quantum states that can be processed by the quantum circuit. It determines how the information from classical data is represented in the quantum domain. For different architectures, converting classical state to quantum state, different encoding techniques have been used. In QELSTM, Hadamard Gate has been used to get all super-positional states, followed by Ry and Rz Gates respectively with arctan function as a parameter with the datapoint in each qubit, it is mainly a variation of angle encoding. For generating higher order terms, $(.)^2$ function has been used along with arctan.

MODEL TRAINING: As depicted in the architectural diagram of FIG. 1A, optimization process is guided by defining a cost function that determines the difference between QELSTM predicted values and actual target values. The gradient-based optimization methods are used like those in classical deep learning. Pennylane supports automatic differentiation to compute gradients of the quantum circuit with respect to its parameters. The model is iteratively trained by updating the parameters to minimize the cost function.

CONVERGENCE CRITERIA: The convergence criteria for Mean Squared Error (MSE) typically involves monitoring the change in MSE across training iterations or epochs and determining when the decrease in MSE stabilizes i.e., a decreasing trend is observed in the MSE loss over epochs indicating that model is improving according to the training data. Eventually, when the difference between the loss becomes constant or negligible, we say that the model has converted to a solution.

$$MSE = \frac{1}{n}\sum_{i=1}^{n}(y_i - \widehat{y_i})^2 \qquad (1)$$

Where, $y_i$ is actual parcel count and $\hat{y}_i$ is the forecasted parcel count for $i^{th}$ day and n is the total number of days. To calculate the accuracy of the model used is a mean absolute percentage error.

$$MAPE = \frac{1}{n}\sum_{i=1}^{n}\left|\frac{y_i - \widehat{y_i}}{y_i}\right| \qquad \text{and Accuracy} = 1 - MAPE \qquad (2)$$

Here, actual is the actual object count (e.g., parcel count) and predicted means the predicted value for that day (predefined time period) by the QELSTM model.

HYPERPARAMETER TUNING: Hyperparameter tuning includes adjusting the batch size, sequence length, hidden dimension, learning rate and number of layers. Sequence length represents the number of previous days data used to predict the immediate next day's parcel count. Smaller batch sizes may lead to more frequent updates of the trainable parameters but may increase training time. Tuning the learning rate to control the size of parameter updates during training. Further, model's performance can be significantly impacted by experimenting with the number of qubits and layer in the Quantum circuit.

Once trained, the one or more classical hardware processors 204 are configured by the instructions to apply the trained QELSTM model to predict object count at the node during inferencing stage based on a plurality of features extracted from a time series data of time period of interest.

To understand circuit depth in comparison to circuit depth challenges faced by works in literature few existing quantum LSTM approaches are discussed. In "Linear-Layer-Enhanced Quantum Long Short-Term Memory for Carbon Price Forecasting" by Yuji Cao et.al, a QLSTM model is used to predict carbon price. In the QLSTM used in the above work, the entanglement in Variational Quantum Circuits (VQC) is created between all possible pairs of qubits, which leads to quadratic circuit depth with respect to number of qubits. Due to all-to-all entanglement, the number of trainable parameters are high. For these two reasons, the circuit is more error prone and has higher computations during training. This all-to-all entangled circuit is more suitable on a quantum hardware where the physical qubits are fully connected. To execute this circuit in a low qubit connected quantum hardware, extra overhead is required.

In the QELSTM of the method and system disclosed herein, optimal number of entanglements are created between the qubits based on the correlation scores. The trainable parameters ('d' is number of features, 'h' is hidden size, 'Q' is number of qubits and 'S' is sequence length) are less, and the circuit depth is constant with respect to number of qubits, which leads to a smaller number of computations and making the circuit less error prone. Thus, the quantum circuit disclosed herein can be executed on a low connect qubit system as well as an all-to-all connected qubits system without any extra overhead.

Another work titled "Entanglement-Structured LSTM Boosts Chaotic Time Series Forecasting" by Xiangyi Meng et.al., In the given prior art, they used MERA (multi-scale entanglement renormalization ansatz) Parametrized Quantum circuits PQCs in LSTM architecture. In MERA the CNOT gates can only connect two adjacent qubits. Due to that it cannot create a connection between non-adjacent qubits. But in the PQCs of the QELSTM disclosed herein connections can be created between non-adjacent qubits. For example, say, 10 features, are encoded by 10 qubits and there is a strong correlation between feature 2 and feature 6. In the above work, direct connection between qubit 2 and qubit 6 is not possible while it is required and due to that model performance will affect. The optimal CNOT gate design disclosed for the QELSTM allows to create direct connection with adjacent qubit placement. In the above work, entanglement is possible only between 2 adjacent qubits and they used liner ansatz. i.e., they create entanglement between the following qubits: 1 & 2, 2&3, 3&4, 4&5, 5&6. So, the circuit depth increases linearly w.r.t number of qubits which leads to more computation and error prone. But in our case the circuit depth remains constant w.r.t number of qubits which leads to less computations and less error prone.

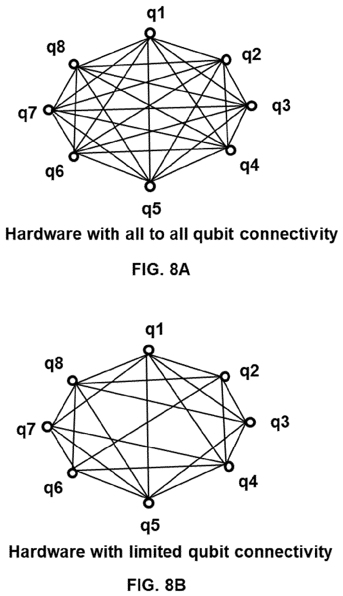

FIG. 8A refers to a QPU architecture/topology of a fully (all to all) connected quantum hardware. FIG. 8B refers to a QPU architecture/topology of a limited connected quantum hardware, in accordance with some embodiments of the present disclosure.

The QELSTM model can easily execute on current available quantum hardware, suitable for both strongly qubit connected as in FIG. 8A and limited qubit connected hardware as in FIG. 8B. Strong qubit connectivity refers to a QPU architecture, where all the qubits are physically connected to each other (FIG. 8A). So any quantum circuits (any connection between qubits) are able to execute in these QPUs without any extra overhead. Limited qubit connection refers to the QPU architecture where all qubits are not physically connected, some are physically connected to each other (FIG. 8B). To execute some VQCs, these limited connectivity QPUs need an extra overhead to map the circuits to its architecture before it can execute it. For example: If physical qubit 1 and physical qubit 5 is not connected in the QPU. And if a quantum circuit has a connection between qubit 1 and qubit 5, then to execute this circuit on that QPU it needs extra overhead before execution.

However, the optimal CNOT design of the QELSTM with the mapping technique (that assigns most correlated qubits (associated feature) in adjacent position) the circuit depth is maintained constant, and independent of the number of qubits. Thus, the QELSTM model disclosed can be easily implemented on full connectivity and limited connectivity QPU, without any extra computational overhead.

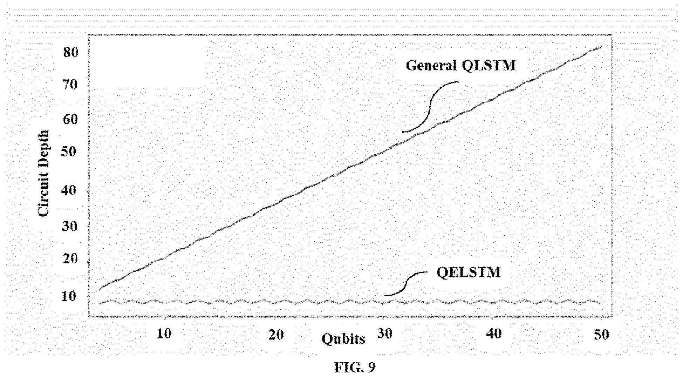

FIG. 9 is a graph depicting comparative analysis of circuit depth offered by QELSTM versus general QLSTM as number of input qubits increase, in accordance with some embodiments of the present disclosure. The graph shows QELSTM maintaining a constant circuit depth and is independent of the number of qubits, while for general QLSTM, the circuit depth goes on increasing linearly.

Impact of Efficiency/accuracy of overall model due to quantum error: Limited qubit connectivity can worsen the impact of quantum errors. Unintended coupling or influence between qubits in a quantum processor can lead to interference and potential errors in quantum computations. The ansatz, by being tailored to the hardware, can mitigate these effects, and enhance the robustness of the quantum algorithm.

Compatibility: Ansatz designed to somewhat match the limited qubit connectivity of the quantum hardware ensures that the quantum algorithm can be successfully implemented on the available hardware without violating physical qubit constraints. Quantum hardware platforms have a specific layout of physical qubits with all connected or limited connectivity between them due to hardware constraints. Random mapping (of features/logical qubits) may lead to inefficient use of qubits and gate operations that can degrade the overall performance. Mapping a fully entangled circuit on a limited qubit connectivity hardware could be an overhead. Thus, the method disclosed consider the correlation between the features to entangle the 2 corresponding qubits together with a CNOT gate. Thus, the method and system herein provides with optimal design leads to a limited CNOT gate circuit, which would be fully compatible with both all connected qubit hardware as well as quantum hardware with limited qubit connectivity. Execution of strongly connected circuit on a limited qubit connective hardware leads to significant overhead as compared to a limited CNOT gate circuit.

USE CASE: In a logistics environment, significance of improvement in prediction accuracy in parcel count prediction with due to the disclosed QELSTM is provided below.

Example: If a parcel services company distributes 100 parcels per day and the average cost charged per parcel is $10. Total income per day becomes $10 x 100 parcels equals to $1000. Let total daily investment in Resource Management (Technology infrastructure, Fleet management, Human Resource, Supply chain partnership) is 25% of total income i.e., $250. Let us assume an existing forecasting model predicts with 15% error (that means 15% less or higher than the actual value). If the forecast falls short by 15% allocating resources based on this prediction could result in the company being ill-prepared to handle the additional 15 parcels beyond what was anticipated, and they will not be accepted for that day. $150 ($10 x 15 parcels) will be the loss for the day with predicted 85 parcels instead of actual 100 parcels. Conversely, if the forecast exceeds by 15%, resources are overallocated, leading to wastage. $37.5 ($250/100 x 115 parcels - $250/100 x 100 parcels) will be the loss for the day with 115 parcels instead of 100. Even a mere 1% improvement in accuracy could yield substantial savings for such a company, as the amount they invest in resources is very high. Even a medium-large parcel services company handles around 245 million parcels annually, which leads to an even greater amount of loss with the existing forecasting model. This loss can be recovered if the trained QELSTM that has higher parcel count prediction accuracy is deployed in the logistic environment. A comparative analysis on prediction accuracy is provided by Table 4 below. The QELSTM model gives 3% accuracy improvement as compared to the classical LSTM:

Table 4

| #epochs | (Classical LSTM) | (QELSTM) |
|---------|------------------|----------|
| 10 | 38.97% | 52.82% |
| 20 | 43.89% | 73.47% |
| 30 | 61.23% | 75.31% |
| 50 | 75.44% | 80.93% |

(continued)

| #epochs | (Classical LSTM) | (QELSTM) |
|---------|------------------|----------|
| 100 | **83.57%** | **86.56%** |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for count prediction, the method comprising:

   acquiring (302), by one or more classical hardware processor, historical time series data associated with presence of a plurality of objects at each of a plurality of nodes per predefined time window;

deriving (304), by the one or more classical hardware processor, a plurality of features by processing the historical time series data to obtain patterns, seasonality, and trends in context of a set of predefined time periods and a plurality of calendar events;

generating (306), by one or more classical hardware processor, a feature correlation matrix defining pairwise correlation between plurality of features in terms of correlation score to linearly combine correlated features and obtain a set of transformed features with dimensionality reduction;

mapping (308), by the one or more classical hardware processors, the set of transformed features to corresponding set of qubits of Variational Quantum Circuit (VQCs) of a Quantum Enhanced Long short-term memory (QELSTM) model based on correlation between each of the transformed features with highest correlated qubits are placed adjacent to each other, and wherein an optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC; and

training (310), by the one or more classical hardware processor, the QELSTM model with the set of transformed features for object count prediction of at a node using a gradient-based optimization technique, wherein the VQCs that replace learnable parameters of a classical LSTM are executed by Quantum Processing Units (QPUs).

2. The processor implemented method as claimed in claim 1, comprising applying the trained QELSTM model to predict object count at the node during inferencing stage based on a plurality of features extracted from a time series data of time period of interest.

3. The processor implemented method as claimed in claim 1, wherein the acquired historical time series data is preprocessed for missing values, outliers, anomalies prior to deriving the plurality of features.

4. The processor implemented method as claimed in claim 1, wherein linear combination of one or more features among the plurality of features into a transformed feature is performed by:

generating a correlated graph of the plurality of features;
combining a subset set of features in a sub-graph into the transformed feature if the sub-graph is fully connected; and
retaining the non-fully connected features as individual features.

5. The processor implemented method as claimed in claim 1, wherein the mapping technique that enables entanglement of the qubits in accordance with the optimal CNOT gate design maintaining the constant circuit depth comprises:

generating a transformed feature correlation matrix of the set of transformed features comprising a correlation score between each of the set of transformed features;
determining a highest correlation score and associated two transformed features from among the set of transformed features;
selecting number of a set of qubits for the VQC of the QELSTM model equal to number of set of transformed features and assigning first transformed feature among the two transformed features to a first qubit;
determining next two transformed features from the remaining set of transformed that have highest correlation score with the first transformed feature;
assigning the next two transformed features to a second cubit and a last cubit from among the set of cubits;
determining the highest correlation score from among the unassigned transformed features; and
repeating the assigning of the unassigned transformed features to unassigned qubits from the set of qubits until all among the set of transformed features are assigned.

6. A system (100) for count prediction, the system (100) comprising:

a classical computing system (102A) a memory (202) storing instructions;

one or more Input/Output (I/O) interfaces (206); and
one or more hardware processors (204) coupled to the memory (202) via the one or more I/O interfaces (206); and

a quantum computing system (102B) coupled to the classical computing system (102A) comprising Quantum Processing Units (QPUs) (212),
wherein the one or more hardware processors (204) are configured by the instructions to:

acquire historical time series data associated with presence of a plurality of objects at each of a plurality of nodes per predefined time window;

derive a plurality of features by processing the historical time series data to obtain patterns, seasonality, and trends in context of a set of predefined time periods and a plurality of calendar events;

generate a feature correlation matrix defining pairwise correlation between plurality of features in terms of correlation score to linearly combine correlated features and obtain a set of transformed features with dimensionality reduction;

map the set of transformed features to corresponding set of qubits of Variational Quantum Circuit (VQCs) of a Quantum Enhanced Long short-term memory (QELSTM) model based on correlation between each of the transformed features with highest correlated qubits are placed adjacent to each other, and wherein an optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC; and

train the QELSTM model with the set of transformed features for object count prediction of at a node using a gradient-based optimization technique, wherein the VQCs that replace learnable parameters of a classical LSTM are executed by Quantum Processing Units (QPUs).

7. The system as claimed in claim 6, comprising applying the trained QELSTM model to predict object count at the node during inferencing stage based on a plurality of features extracted from a time series data of time period of interest.

8. The system as claimed in claim 6, wherein the acquired historical time series data is preprocessed for missing values, outliers, anomalies prior to deriving the plurality of features.

9. The system as claimed in claim 6, wherein the one or more classical hardware processors (204) are configured to linearly combine one or more features among the plurality of features into a transformed feature by:

generating a correlated graph of the plurality of features;
combining a subset set of features in a sub-graph into the transformed feature if the sub-graph is fully connected; and
retaining the non-fully connected features as individual features.

10. The system as claimed in claim 6, wherein the mapping technique that enables entanglement of the qubits in accordance with the optimal CNOT gate design maintaining the constant circuit depth comprises:

generating a transformed feature correlation matrix of the set of transformed features comprising a correlation score between each of the set of transformed features;
determining a highest correlation score and associated two transformed features from among the set of transformed features;
selecting number of a set of qubits for the VQC of the QELSTM model equal to number of set of transformed features and assigning first transformed feature among the two transformed features to a first qubit;
determining next two transformed features from the remaining set of transformed that have highest correlation score with the first transformed feature;
assigning the next two transformed features to a second cubit and a last cubit from among the set of cubits;
determining the highest correlation score from among the unassigned transformed features; and
repeating the assigning of the unassigned transformed features to unassigned qubits from the set of qubits until all among the set of transformed features are assigned.

11. One or more non-transitory machine-readable information storage mediums comprising one or more instructions which when executed by one or more hardware processors of a classical computing system cause:

acquiring historical time series data associated with presence of a plurality of objects at each of a plurality of nodes per predefined time window;
deriving a plurality of features by processing the historical time series data to obtain patterns, seasonality, and trends in context of a set of predefined time periods and a plurality of calendar events;
generating a feature correlation matrix defining pairwise correlation between plurality of features in terms of correlation score to linearly combine correlated features and obtain a set of transformed features with dimensionality reduction;
mapping the set of transformed features to corresponding set of qubits of Variational Quantum Circuit (VQCs) of a Quantum Enhanced Long short-term memory (QELSTM) model based on correlation between each of the transformed features with highest correlated qubits are placed adjacent to each other, and wherein an optimal Controlled Quantum (CNOT) gate design of a VQC with limited connectivity and creates qubit entanglement structure for the QELSTM by alternating between odd and even qubit indices to provide a constant circuit depth independent of number of the set of qubits in the VQC; and

training the QELSTM model with the set of transformed features for object count prediction of at a node using a gradient-based optimization technique, wherein the VQCs that replace learnable parameters of a classical LSTM are executed by Quantum Processing Units (QPUs).

12. The one or more non-transitory machine-readable information storage mediums as claimed in claim 11, comprising applying the trained QELSTM model to predict object count at the node during inferencing stage based on a plurality of features extracted from a time series data of time period of interest.

13. The one or more non-transitory machine-readable information storage mediums as claimed in claim 11, wherein the acquired historical time series data is preprocessed for missing values, outliers, anomalies prior to deriving the plurality of features.

14. The one or more non-transitory machine-readable information storage mediums as claimed in claim 11, wherein linear combination of one or more features among the plurality of features into a transformed feature is performed by:

generating a correlated graph of the plurality of features;
combining a subset set of features in a sub-graph into the transformed feature if the sub-graph is fully connected; and
retaining the non-fully connected features as individual features.

15. The one or more non-transitory machine-readable information storage mediums as claimed in claim 11, wherein the mapping technique that enables entanglement of the qubits in accordance with the optimal CNOT gate design maintaining the constant circuit depth comprises:

generating a transformed feature correlation matrix of the set of transformed features comprising a correlation score between each of the set of transformed features;
determining a highest correlation score and associated two transformed features from among the set of transformed features;
selecting number of a set of qubits for the VQC of the QELSTM model equal to number of set of transformed features and assigning first transformed feature among the two transformed features to a first qubit;
determining next two transformed features from the remaining set of transformed that have highest correlation score with the first transformed feature;
assigning the next two transformed features to a second cubit and a last cubit from among the set of cubits;
determining the highest correlation score from among the unassigned transformed features; and

repeating the assigning of the unassigned transformed features to unassigned qubits from the set of qubits until all among the set of transformed features are assigned.

System —
100

Classical computing system
**102A**

Acquiring historical time
series data e.g. day
level parcel count

user

Web
Services

Forecasting

Yes

convergence
criteria
satisfied?

No

Hyper
parameter
tuning

Data
Preparation

QELSTM
model
building

QELSTM
model
training

Quantum computing system
**102B**
Executing Variational quantum
circuit (VQC)of the QELSTM

FIG. 1A

**System 100**

**102A**

Classical hardware processor(s)
**204**

Memory **202**

Modules **210**
(QELSTM model)

Database **208**

I/O Interface(s) **206**

**102B**

Control system **216**

Signal delivery
system **214**

Quantum processing
units **212**

Quantum memory
**218**

**FIG. 2A**

**Classical computing system 102A**

Database 108

↓

Acquiring historical time series data

↓

Feature engineering

↓

Data normalization

↓

Feature transformation

QELSTM model training

Classical optimizer

↓

Updated trainable Parameters

↓

Trained QELSTM model

↓

Forecasting by trained QELSTM model

**Quantum computing system 102B**

QPU 212

Initial state

↓

Data encoding/ Corresponding Quantum state

↓

Ansatz creation (Optimal CNOT gate design)

↓

Quantum measurement

VQC

## FIG. 2B

300

acquiring historical time series data associated with presence of a plurality of objects at each of a plurality of nodes per predefined time window — 302

deriving a plurality of features by processing the historical time series data to obtain patterns, seasonality, and trends in context of a set of predefined time periods and a plurality of calendar events — 304

generating a feature correlation matrix defining pairwise correlation between plurality of features in terms of correlation score to linearly combine correlated features and obtain a set of transformed features with dimensionality reduction — 306

mapping the set of transformed features to corresponding set of qubits of a Quantum Enhanced Long short-term memory (QELSTM) model, wherein a mapping technique ensures correlation between each of the transformed features is captured via an optimal Controlled Quantum (CNOT) gate design that follows qubit entanglement structure for the QELSTM by alternating between odd and even qubit indices — 308

training the QELSTM model with the set of transformed features for object count prediction of at a node using a gradient-based optimization technique — 310

**FIG. 3**

**Fully connected graph with 3 features:**
   {f1, f2, f3} --> F1

**Fully connected graph with 2 features:**
   {f3, f4}     --> F2

   {f5}          --> F3

**Set of Transformed features: F1, F2, F3**

**FIG. 4**

QELSTM model

FIG. 5A

VQC 502

Optimal CNOT gate design offering constant circuit depth

F1
F2
F3
F4
.
.
.
.

Transformed features F1, F2.... mapped to qubit
indices (q1,q2,q3....)based on mapping technique

Encoding layer

Variational layer

FIG. 5B

FIG. 6A

| features | Physical Qubit |
| :---: | :---: |
| ↓ | ↓ |
| F8 | q1 |
| F6 | q2 |
| F4 | q3 |
| F7 | q4 |
| F3 | q5 |
| F1 | q6 |
| F9 | q7 |
| F2 | q8 |
| F10 | q9 |
| F5 | q10 |

FIG. 6B

q1

q2

q3

q4          FIG. 7A

q1

q2

q3

q4

q5          FIG. 7B

q1

q2

q3

q4          FIG. 7C

q5

FIG. 7D

FIG. 7E

Hardware with all to all qubit connectivity

FIG. 8A

Hardware with limited qubit connectivity

FIG. 8B

FIG. 9

Europäisches
Patentamt

European
Patent Office

Office européen
des brevets

## EUROPEAN SEARCH REPORT

**Application Number**

EP 25 18 2538

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAAD ZAFAR KHAN ET AL: "Quantum Long Short-Term Memory (QLSTM) vs Classical LSTM in Time Series Forecasting: A Comparative Study in Solar Power Forecasting", ARXIV.ORG, CORNELL UNIVERSITY LIBRARY, 201 OLIN LIBRARY CORNELL UNIVERSITY ITHACA, NY 14853, 9 April 2024 (2024-04-09), XP091722454, * abstract * * page 9, paragraph 1 * * page 11, paragraph 1 - paragraph 6 * * page 14, paragraph 1 - paragraph 3 * * page 12, paragraph 4 * * page 13, paragraph 4 * * page 27; figure A.8 * * page 14, paragraph 7 - page 15, paragraph 5 * * page 28; figure A.9 * ----- | 1-15 | INV. G06N3/0442 G06N10/20 |
| A | KHAN MANSOOR A. ET AL: "Beyond Bits: A Review of Quantum Embedding Techniques for Efficient Information Processing", IEEE ACCESS, vol. 12, 27 March 2024 (2024-03-27), pages 1-20, XP093333503, USA ISSN: 2169-3536, DOI: 10.1109/ACCESS.2024.3382150 * page 46122, right-hand column, paragraph 1 - page 46124, right-hand column, paragraph 2; figures 2, 3 * ----- -/-- | 1-15 | **TECHNICAL FIELDS SEARCHED (IPC)** <br> G06N |

The present search report has been drawn up for all claims

| Place of search | Date of completion of the search | Examiner |
|---|---|---|
| Munich | 10 November 2025 | Herri, Edmond |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

Europäisches
Patentamt

European
Patent Office

Office européen
des brevets

## EUROPEAN SEARCH REPORT

**Application Number**

EP 25 18 2538

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI DIANKANG: "Multivariate time series prediction based on quantum enhanced LSTM models", 20230815, vol. 12719, 15 August 2023 (2023-08-15), pages 1271920-1271920, XP060187389, ISSN: 0277-786X, DOI: 10.1117/12.2685468 ISBN: 978-1-5106-6661-0 * page 6 * * page 10; figure 3 * * page 13, paragraph 7 * * page 14 - page 16 * * page 18, paragraph 5 - page 20, paragraph 8 * * page 27, paragraph 1 - paragraph 3 * ----- | 1-15 | |
| A | ANAND PRABHAT ET AL: "Time-Series Forecasting Using Continuous Variables-Based Quantum Neural Networks", 2024 16TH INTERNATIONAL CONFERENCE ON COMMUNICATION SYSTEMS & NETWORKS (COMSNETS), IEEE, 3 January 2024 (2024-01-03), pages 994-999, XP034547651, DOI: 10.1109/COMSNETS59351.2024.10427192 [retrieved on 2024-02-16] * page 995, right-hand column, paragraph 1 - page 997, right-hand column, last paragraph; figures 1, 2 * ----- -/-- | 1-15 | **TECHNICAL FIELDS SEARCHED (IPC)** |

The present search report has been drawn up for all claims

| Place of search | Date of completion of the search | Examiner |
|---|---|---|
| Munich | 10 November 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**EUROPEAN SEARCH REPORT**

Application Number

EP 25 18 2538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PADHA ANUPAMA ET AL: "Quantum deep neural networks for time series analysis", QUANTUM INFORMATION PROCESSING, vol. 23, no. 6, 24 May 2024 (2024-05-24), pages 1-35, XP093333478, Ne ISSN: 1573-1332, DOI: 10.1007/s11128-024-04404-y Retrieved from the Internet: URL:https://link.springer.com/article/10.1007/s11128-024-04404-y/fulltext.html> * page 1, paragraph 2 - paragraph 3 * * page 3 - page 4; figure 2 * ----- | 1-15 | |

TECHNICAL FIELDS SEARCHED (IPC)

The present search report has been drawn up for all claims

| Place of search | Date of completion of the search | Examiner |
|---|---|---|
| Munich | 10 November 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421046550

**Non-patent literature cited in the description**

- **XIANGYI MENG**. *Entanglement-Structured LSTM Boosts Chaotic Time Series Forecasting*